# EUROPÄISCHE PATENTSCHRIFT

(11) **EP 3 759 822 B1**
(45) Veröffentlichungstag und Bekanntmachung des Hinweises auf die Patenterteilung: **10.09.2025**
(21) Anmeldenummer: 19706540.2
(22) Anmeldetag: 18.02.2019
(51) Int. Cl.: H04B 1/00, H04B 1/16

(54) **FUNKEMPFÄNGER**
RADIO RECEIVER
RÉCEPTEUR RADIO

(30) Priorität: 28.02.2018 DE 102018001556; 17.04.2018 DE 102018003106
(43) Veröffentlichungstag der Anmeldung: 06.01.2021
(73) Patentinhaber: Diehl Metering Systems GmbH, 90451 Nürnberg (DE); Fraunhofer-Gesellschaft zur Förderung der angewandten Forschung e. V., 80686 München (DE)
(72) Erfinder: PETKOV, Hristo, 90425 Nürnberg (DE); MZYK, Raphael, 91126 Kammerstein (DE); KAUPPERT, Thomas, 90455 Nürnberg (DE); GOTTSCHALK, Klaus, 90610 Winkelhaid (DE); KILIAN, Gerd, 91056 Erlangen (DE); BERNHARD, Josef, 92507 Nabburg (DE); KNEISSL, Jakob, 90765 Fürth (DE); WECHSLER, Johannes, 91174 Spalt (DE); BIEG, Karol, 80686 München (DE)
(74) Vertreter: Diehl Patentabteilung
(86) Internationale Anmeldenummer: PCT/EP2019/053975
(87) Internationale Veröffentlichungsnummer: WO 2019/166260

(56) Entgegenhaltungen:
- EP-A2- 2 469 717
- DE-A1- 102004 052 897
- US-A1- 2008 232 511

## Beschreibung

Die vorliegende Erfindung betrifft einen Funkempfänger gemäß dem Oberbegriff des Anspruchs 1, einen Funkempfänger nach Anspruch 2 sowie ein Kommunikationssystem nach Anspruch 18 zum Übertragen von Daten.

### Technologischer Hintergrund

Die vorliegend interessierenden Funkempfänger des Software Defined Radio (SDR)-Typs enthalten in der Regel eine Empfangseinrichtung, wie z. B. einen Funkchip, und werden vor allem an batteriebetriebenen stationären Sensoranordnungen mit uni- oder bidirektionaler Datenübertragung verwendet. Bei den zu empfangenden Daten handelt es sich beispielsweise um Daten zum Betrieb der Sensoranordnung, wie z. B. Aktualisierungsdaten, Programmdaten, Steuerdaten oder dergleichen, die von einem Konzentrator an den Funkempfänger gesendet werden. Die Daten bzw. Datentelegramme werden unter anderem aus Gründen eines möglichst geringen Energieaufwands am Funk-Front-End vom Konzentrator nicht am Stück sondern gestückelt in Form von einzelnen Datenpaketen oder Teilen davon (z. B. Teildatenpakete) gesendet und vom Funkempfänger so empfangen.

Bei herkömmlichen Funkchips handelt es sich in der Regel um Niedrigpreis-Bauteile mit bereits fest in den Funkchip integrierten Funktionen, die nur sehr eingeschränkt verändert werden können. Vor allem bei Schmalbandfunkübertragungen muss beispielsweise die Samplingrate genau getroffen werden, was an den Funkchips jedoch nicht so genau eingestellt werden kann. Kann die Samplingrate nicht genau getroffen werden, sind aufwändige Rechenleistungen für ein Resampling notwendig, was entsprechend viel elektrische Energie benötigt und wegen der energieautarken Umgebung nicht erwünscht bzw. nicht möglich ist. Zudem wird der im Funkchip enthaltene A/D-Wandler (Analog/Digital-Wandler) üblicherweise durch einen Taktgeber getaktet, sodass die Samplingrate des Funkchips nur sehr ungenau eingestellt werden kann. Andererseits ist man bestrebt, vor allem für die vorgenannten Anwendungen Funkempfänger bereit zu stellen, die eine möglichst hohe Reichweite haben.

### Nächstliegender Stand der Technik

In der US 2008/232511 A1 werden eine Vorrichtung und ein Verfahren zum Verarbeiten von Signalen offenbart, die das Empfangen eines Eingangssignals und das Bilden eines Stroms digitaler Abtastwerte des Eingangssignals durch Abtasten mit einer Abtastfrequenz umfassen und das Mischen des Stroms digitaler Abtastwerte unter Verwendung einer Mischsequenz, die eine Sinussequenz und eine Cosinus-Sequenz basierend auf der Abtastfrequenz aufweist, um eine Eingangssequenz zu erzeugen, jede der Sinussequenz und der Cosinus-Sequenz eine Vielzahl von Komponenten in einer solchen Anordnung enthält, dass mindestens eine der Komponenten einen Nullwert hat und die verbleibenden Komponenten einen Nicht-Nullwert haben, und Filtern der Eingangssequenz unter Verwendung einer Vielzahl von Mehrphasenfilterteilen, die jeweils den Nicht-Nullkomponenten der Sinussequenz und der Cosinus-Sequenz entsprechen, und selektives Kombinieren der Ausgänge der Mehrphasenfilterteile, um eine In-Phasen-Sequenz und eine Quadratursequenz zu erzeugen.

Die DE 10 2004 052897 A1 beschreibt einen Funkempfänger (10) zum Empfangen eines von einem Sender ausgesendeten Datenbursts, wobei der Datenburst einen ersten Abschnitt, der senderseitig mit einem ersten Modulationsverfahren moduliert wurde, und einen nach dem ersten Abschnitt gesendeten zweiten Abschnitt, der senderseitig mit einem zweiten Modulationsverfahren moduliert wurde, umfasst und der Funkempfänger (10) einen ersten Empfangspfad (12) zur Verarbeitung des ersten Abschnitts und einen zweiten Empfangspfad (13) zur Verarbeitung des zweiten Abschnitts aufweist.

In der EP 2 469 717 A2 wird ein Software-Funkempfänger (11) offenbart, der zum Erfassen digitaler Messwerte (17) über einen Signalprozessor (15) aus demodulierten und digitalisierten Daten-Empfangssignalen (16) Einsatz findet, wobei dieser im Stromsparmodus oder mit gesteigerter Reichweite betrieben werden kann. In letzterem Falle wird ein wesentlicher Anteil der Detektions-Algorithmen in einen dem Signalprozessor (15) vorgeschalteten programmierbaren oder bereits anwendungsspezifisch ausgeführten, digitalen Logikbaustein (18) verlagert, dessen ansonsten überbrückte Funktion dafür unter Aktivieren seines Konfigurationsspeichers (22) durch Öffnen eines Überbrückungs-Schalters (19) freigegeben wird.

Aus der EP 3 002 560 B1 ist ein batteriebetriebenes stationäres Endgerät (bzw. eine Sensoranordnung) zur Durchführung einer drahtlosen unidirektionalen Übertragung bekannt. Das Endgerät umfasst einen Sensor zum Ermitteln von Sensordaten und zum Bereitstellen eines Sensordatenpakets, welches auf den Sensordaten basiert. Mittels einer Einrichtung zum Erzeugen von Datenpaketen wird das Sensordatenpaket in zumindest drei Datenpakete aufgeteilt, wobei jedes der Datenpakete kürzer ist als das Sensordatenpaket selbst. Zudem umfasst die Sensoranordnung eine Einrichtung zum Senden von Datenpaketen, die dazu vorgesehen ist, die Datenpakete mit einer Datenrate von weniger als 50 kbit/s und in einem zeitlichen Abstand über einen Kommunikationskanal zu senden. Durch die im Vergleich zu herkömmlichen Datenraten von 100 kbit/s geringe Datenrate kann das Signal zu Rauschverhältnis an einem Datenempfänger (Konzentrator) verringert werden. Zudem werden die Datenpakete von der Einrichtung zum Erzeugen von Datenpaketen derart kanalcodiert, dass nur ein Anteil der Datenpakete zum Decodieren des Sensordatenpakets erforderlich ist. Somit wird durch den Einsatz eines derartigen Endgerätes die Sendereichweite vom Endgerät zum Konzentrator erhöht. Jedoch kann durch den Einsatz eines derartigen Endgerätes keine Verbesserung der Datenübertragungsqualität bei der Übertragung vom Konzentrator zum Endgerät erzielt werden.

Die Aufgabe der vorliegenden Erfindung besteht somit darin, einen Funkempfänger, insbesondere für ein gattungsgemäßes Endgerät, mit verbesserter Datenübertragungsqualität bei gleichzeitig optimiertem Stromverbrauch zur Verfügung zu stellen.

### Lösung der Aufgabe

Die vorstehende Aufgabe wird durch einen Funkempfänger gemäß Anspruch 1 gelöst. Zweckmäßige Ausgestaltungen der Erfindung sind in den weiteren Ansprüchen genannt.

Bei einem erfindungsgemäßen Funkempfänger kann es sich um einen Funkempfänger des SDR-Typs handeln. Unter SDR-Typ im Sinne der Erfindung sind Konzepte für Hochfrequenz-Sender und -Empfänger zusammengefasst, bei denen kleinere oder größere Anteile der Signalverarbeitung mit Software verwirklicht werden. Der Funkempfänger umfasst hierzu eine Empfangseinrichtung (z. B. einen Funkchip), welche die Daten in Form mindestens eines Datenpakets oder eines Teils davon (Teildatenpaket) oder eines Datenstroms mit einer bestimmten Datenrate empfängt und zur Datenweiterverarbeitung bereitstellt. Insbesondere kann es sich bei dem Datenstrom um einen kontinuierlichen oder teilkontinuierlichen (d. h. mit Unterbrechungen versehenen) Datenstrom handeln.

Dadurch, dass die Daten in einem Betriebsmodus A innerhalb der Empfangseinrichtung abgezweigt und einem Mikrocontroller zugeführt werden, der Mikrocontroller oder die Empfangseinrichtung die Daten dezimiert, indem der Mikrocontroller bzw. die Empfangseinrichtung aus der Samplemenge nur einen Teil auswählt, und der Mikrocontroller die dezimierten Daten in einem Speicher zwischenspeichert und für eine Weiterverarbeitung bereitstellt, können Daten ohne große Rechenleistung des Mikrocontrollers und ohne ein Resampling einer weiteren Verarbeitung zugeführt werden. Hierfür wird nur vergleichsweise wenig elektrische Energie benötigt und aufgrund dessen die autarke Energiequelle nur geringfügig belastet. Dadurch wird die Datenübertragungsqualität bei gleichzeitig verringertem bzw. optimiertem Stromverbrauch verbessert.

Zweckmäßigerweise umfasst die Empfangseinrichtung einen Filter, welcher die Daten vor der Zuführung an den Mikrocontroller filtert, sodass unnötige Rechenoperationen seitens des Mikrocontrollers verringert werden. Infolgedessen wird die Datenübertragungsqualität zusätzlich verbessert und der Energieverbrauch verringert.

Ferner kann die Dezimierung der Daten durch den Mikrocontroller erfolgen, indem der Mikrocontroller einzelne Samples der Samplemenge unberücksichtigt lässt, d. h. verwirft, und die Auswahl der Samples anhand eines ganzzahligen Dezimierungsfaktors erfolgt. Dadurch wird die übertragene Samplemenge reduziert, wodurch auch die Bandbreite zur Übertragung der Daten zwischen Empfangseinrichtung und Mikrocontroller verringert werden kann. Die Samplingrate stellt somit die maximal mögliche ungefilterte Bandbreite zwischen Empfangseinrichtung und Mikrocontroller dar und entspricht vorzugsweise einem ganzzahligen Faktor der nach dem Filter verwendeten (gefilterten) Bandbreite.

Als besonders vorteilhaft hat es sich erwiesen, wenn die Bandbreite der dem Mikrocontroller bereitgestellten Daten bzw. die nach dem Filter verwendete Bandbreite vorzugsweise kleiner als 200 kHz, vorzugsweise kleiner als 100 kHz und besonders vorzugsweise kleiner als 50 kHz ist.

Dadurch, dass am Mikrocontroller für unterschiedliche Bandbreiten unterschiedliche Samplingraten festlegbar sind, kann die Übertragung der Daten an unterschiedliche oder abrupt ändernde Übertragungsbedingungen angepasst werden. In dem Funksystem können dabei unterschiedliche Datenraten unterstütz werden, um diese z. B. an abrupt ändernde Übertragungsbedingungen anzupassen. Für unterschiedliche Datenraten werden somit unterschiedliche Samplingraten und damit Bandbreiten benötigt. Die Datenübertragungsqualität wird dabei noch zusätzlich verbessert.

Vorzugsweise ist ein Taktgeber vorgesehen, vorzugsweise ein Schwingquarz oder ein Oszillator mit HF-Quarz oder Schwingquarz. Die Samplingrate wird bevorzugt durch die Taktfrequenz (bzw. Quarzfrequenz) des Taktgebers festgelegt. Der Taktgeber kann dabei auch als Taktgeber des Analog-Digital-Wandlers dienen, sodass letzterer durch eine Änderung der Taktfrequenz bzw. durch die Auswahl eines Taktgebers mit bestimmter Taktfrequenz auch entsprechend anders getaktet wird. Die Taktfrequenz wird dabei unter Berücksichtigung des Dezimierungsfaktors derart festgelegt bzw. ausgewählt, dass sich die gewünschte Samplingrate einstellt. Dadurch wird ein aufwendiges Resampling seitens des Mikrocontrollers verhindert.

Als besonders vorteilhaft hat es sich erwiesen, wenn die Taktfrequenz des Taktgebers zwischen 20 MHz und 50 MHz, vorzugsweise zwischen 23 MHz und 25 MHz, 38 MHz und 40 MHz oder 47 MHz und 49 MHz, besonders vorzugsweise bei 24 MHz, 39 MHz oder 48 MHz liegt.

Zweckmäßigerweise kann der Abtastfehler, welcher beim Abtasten bzw. Sampling auftritt, durch die Auswahl der Taktfrequenz des Taktgebers verändert werden. In bevorzugter Weise wird die Taktfrequenz dabei verringert.

Besonders zweckmäßig ist es, wenn der Fehler des Taktgebers bzw. des Quarzes nach der Änderung der Taktfrequenz kleiner als 10 ppm, vorzugsweise kleiner als 5 ppm, besonders vorzugsweise kleiner als 3 ppm ist.

Zweckmäßigerweise kann der Betriebsmodus A durch den Funkempfänger einsowie ausschaltbar sein. Daraus resultiert der Vorteil, dass das Empfangen und Weiterleiten bzw. Weiterverarbeiten der Daten wahlweise über den Betriebsmodus A erfolgen kann und auch während des Betriebs ein- und/oder ausschaltbar ist, sodass flexibel auf Änderungen im Übertragungs- bzw. Verarbeitungsablauf reagiert werden kann. Die Datenübertragungsqualität und Verarbeitungssicherheit wird dadurch in besonderem Maße verbessert.

Erfindungsgemäß ist neben dem Betriebsmodus A ein Betriebsmodus C vorgesehen, bei dem die Daten von einem Mikroprozessor oder einer Logik bzw. digitalen Empfangsschaltung, der bzw. die der Empfangseinrichtung nachgeschaltet und/oder Teil der Empfangseinrichtung ist, bearbeitet werden. Besonders vorteilhaft ist es dabei, wenn der Funkempfänger derart ausgestaltet ist, dass dieser zwischen dem Betriebsmodus A und dem Betriebsmodus C umschalten kann. Dies kann mittels einer Umschalteinrichtung erfolgen, die erfindungsgemäß integraler Teil der Empfangseinrichtung ist.

Vorzugsweise erfolgt die Übertragung der Daten zwischen der Empfangseinrichtung und dem Mikrocontroller stückweise, d. h. Schritt für Schritt, wobei zwischen den Übertragungsschritten der Daten Zeitintervalle vorgesehen sind, in denen keine Übertragung erfolgt.

Gemäß einer bevorzugten Ausgestaltung kann der Mikrocontroller in den Zeitintervallen, in denen keine Übertragung von Daten erfolgt, in einen Standby- oder Sleepmodus übergehen, um den Energiebedarf innerhalb dieser Zeiträume zu verringern. Dadurch kann Energie in besonderem Maße eingespart und somit z. B. die Einsatzzeit bzw. Haltbarkeit eines batteriebetriebenen energieautarken Endgerätes erhöht werden.

Zweckmäßigerweise kann der Mikrocontroller auch dazu hergerichtet sein, die Daten zu dekodieren. Dadurch kann ein zusätzlicher Decoder eingespart werden.

Alternativ oder zusätzlich ist es auch möglich, dass der Mikrocontroller dazu vorgesehen ist, auch höhere Schichten (insbesondere des OSI-Schichtmodells) zu verarbeiten. Beispielsweise kann der Mikrocontroller dabei auch Programm- und/oder Ablauffunktionen des Endgerätes übernehmen, wie z. B. die Sensoriksteuerung oder die Auswertung der Sensormesswerte. Dadurch kann ein zusätzlicher Mikrocontroller zur Steuerung der Sensorik eingespart werden, wodurch der Energiebedarf sowie die Herstellungskosten in besonderem Maße verringert werden.

Zweckmäßigerweise können die Empfangseinrichtung, der Mikrocontroller und/oder der Decoder als eine gemeinsame strukturelle Einheit ausgestaltet sein. Als besonders vorteilhaft hat sich erwiesen, wenn die Empfangseinrichtung, der Mikrocontroller und/oder der Decoder als Integrierter Schaltkreis (IC) ausgebildet sind. Daraus resultiert der Vorteil, dass dieser in einfacher Weise und besonders kostengünstig im/am Funkempfänger installierbar ist.

Die Daten werden nach dem Eingang in der Empfangseinrichtung mittels des I/Q-Verfahrens (In-Phase/Quadrature-Verfahren) verarbeitet, d. h. es handelt sich bei den Daten erfindungsgemäß um digitale I/Q-Daten. Dies kann beispielsweise dadurch erfolgen, dass das analoge Eingangssignal in zwei Signalteile aufgeteilt wird, wobei ein Signalteil mit der originalen Phasenlage (I-Daten) und der andere Signalteil um 90° phasenverschobener Referenzfrequenz (Q-Daten) erzeugt wird.

Der Funkempfänger des SDR-Typs ist für den Einsatz in einer energieautarken, vorzugsweise in einer langzeitenergieautarken, Umgebung vorgesehen. Unter energieautark bzw. langzeitenergieautark im Sinne der Erfindung wird insbesondere eine Betriebsweise verstanden, bei der der Funkempfänger bzw. das den Funkempfänger umfassende Endgerät ohne äußere Energiezufuhr betrieben ist und den Betrieb eigenständig durchführen bzw. aufrechterhalten kann. Die für den Betrieb benötigte Energie wird in bevorzugter Weise aus einem Energiespeicher bzw. einer Energiequelle bezogen. Vorzugsweise ist als Energiequelle eine Batterie vorgesehen, welche innerhalb des Funkempfängers oder des Endgerätes verbaut und gegebenenfalls staub- und wasserdicht vergossen ist. Insbesondere beträgt die Kapazität der Batterie weniger als 20 Ah. Ferner können auch Mittel zur Gewinnung von elektrischer Energie vorgesehen sein (Energy Harvesting), wobei die zum Betrieb benötigte elektrische Energie insbesondere aus der Luftströmung, der Umgebungsbeleuchtung, der Umgebungstemperatur oder aus Vibrationen (z. B. durch piezoelektrische Effekte) gewonnen wird. In vorteilhafter Weise kann auch eine Kombination von Batterie und Energy Harvesting vorgesehen sein, wodurch sich der Stromverbrauch insbesondere beim vorliegenden SDR-Konzept noch zusätzlich optimieren lässt.

Ferner beansprucht die vorliegende Erfindung einen Funkempfänger des SDR-Typs für den Einsatz in einer energieautarken, vorzugsweise in einer langzeitenergieautarken Umgebung, mit einer Empfangseinrichtung, welche die Daten in Form mindestens eines Datenpakets oder eines Teils davon oder in einem Datenstrom mit einer bestimmten Datenrate (und/oder mit einer bestimmten Sampling- bzw. Abtastrate) empfängt und zur Datenweiterverarbeitung bereitstellt. Die Daten werden dabei in einem Betriebsmodus B einem Mikroprozessor oder einer digitalen Empfangsschaltung (Logik) jeweils der Empfangseinrichtung zugeführt. Anschließend werden die Daten durch den Mikroprozessor oder die digitale Empfangsschaltung gefiltert und danach dezimiert, indem ein Teil aus der Samplemenge durch den Mikroprozessor oder die digitale Empfangsschaltung ausgewählt wird. In praktischer Weise kann die Dezimierung z. B. durch den Mikroprozessor und die Algorithmik bzw. Signalverarbeitung (z. B. Dekodierung, Demodulierung und/oder dergleichen) durch den Mikrocontroller erfolgen. Alternativ oder zusätzlich kann jedoch auch der Mikroprozessor die Algorithmik bzw. Signalverarbeitung durchführen.

Zweckmäßigerweise kann der Betriebsmodus B durch den Funkempfänger einsowie ausschaltbar sein. Erfindungsgemäß ist neben dem Betriebsmodus B auch der Betriebsmodus C vorgesehen, wobei der Funkempfänger erfindungsgemäß zwischen dem Betriebsmodus B und dem Betriebsmodus C mittels der Umschalteinrichtung wechseln kann. Erfindungsgemäß handelt es sich bei den Daten um I/Q-Daten.

Bei einem weiteren nebengeordnet beanspruchten Funkempfänger handelt es sich um einen Funkempfänger eines Typs, bei dem die Signalverarbeitung zumindest im Wesentlichen, vorzugsweise jedoch ausschließlich durch Hardware verwirklicht ist (z. B. als vorgefertigter Hardwarebaustein). Dementsprechend handelt es sich explizit nicht um einen Funkempfänger des SDR-Typs. Dieser Funkempfänger kann beispielsweise komplett als anwendungsspezifische integrierte Schaltung (ASIC - application-specific integrated circuit) ausgestaltet sein.

Die Funktion des Funkempfängers ist somit nicht mehr über Software veränderbar. Durch den Einsatz eines derartigen Funkempfängers können die Herstellungskosten in besonderem Maße verringert werden. Der Funkempfänger umfasst dabei einen Taktgeber, insbesondere einen Schwingquarz. Durch eine Auswahl des Taktgebers mit entsprechender Taktfrequenz wird der Abtastfehler verändert, insbesondere verringert. Demzufolge kann der Abtastfehler durch die Auswahl der Taktfrequenz bzw. des Taktgebers mit bestimmter Taktfrequenz festgelegt bzw. beeinflusst werden. Vorzugsweise kann der Funkempfänger dabei auch derart ausgestaltet sein, dass dieser im Betriebsmodus A, B und/oder C betrieben werden kann.

Nebengeordnet beansprucht die vorliegende Erfindung ein Kommunikationssystem zum Übertragen von Daten zwischen mindestens einem Konzentrator sowie mehreren, insbesondere eine Vielzahl von, energieautarken Endgeräten. Ein Endgerät umfasst dabei jeweils einen Funkempfänger mit einer Empfangseinrichtung, welche die Daten des Konzentrators, in Form mindestens eines Datenpakets, vorzugsweise einer Mehrzahl von einzelnen Datenpaketen, mit einer bestimmten Datenrate (und/oder mit einer bestimmten Sampling- bzw. Abtastrate) empfängt und zur Datenweiterverarbeitung bereitstellt. Ferner ist als Funkempfänger ein erfindungsgemäßer Funkempfänger vorgesehen, der die Daten in einem Betriebsmodus A innerhalb der Empfangseinrichtung abzweigt und einem Mikrocontroller mit einer vorzugsweise festlegbaren Samplingrate zuführt. Der Mikrocontroller oder die Empfangseinrichtung dezimiert hierbei die Daten, indem er aus der Samplemenge einen Teil auswählt. Anschließend speichert der Mikrocontroller die dezimierten Daten in einem Speicher zwischen und stellt diese z. B. für eine Weiterverarbeitung bereit. Alternativ oder zusätzlich kann der Funkempfänger die Daten auch in einem Betriebsmodus B einem Mikroprozessor oder einer digitalen Empfangsschaltung jeweils der Empfangseinrichtung zuführen, und die Daten durch den Mikroprozessor oder die digitale Empfangsschaltung filtern und anschließend dezimieren, indem ein Teil aus der Samplemenge ausgewählt wird.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte schematische Darstellung eines Kommunikationssystems bestehend aus mehreren Endgeräten und einem Konzentrator;
- Fig. 2: eine vereinfachte schematische Darstellung von Daten, die in Form mehrerer Datenpakete gesendet werden;
- Fig. 3: eine vereinfachte schematische Darstellung eines Funkempfängers gemäß dem Stand der Technik;
- Fig. 4: eine vereinfachte schematische Darstellung einer ersten Ausgestaltung des erfindungsgemäßen Funkempfängers;
- Fig. 5: eine vereinfachte schematische Darstellung einer weiteren Ausgestaltung des erfindungsgemäßen Funkempfängers;
- Fig. 6: eine vereinfachte schematische Darstellung einer weiteren Ausgestaltung des erfindungsgemäßen Funkempfängers;
- Fig. 7: eine vereinfachte schematische Darstellung einer weiteren Ausgestaltung des erfindungsgemäßen Funkempfängers;
- Fig. 8: eine vereinfachte schematische Darstellung einer weiteren Ausgestaltung des erfindungsgemäßen Funkempfängers;
- Fig. 9: eine vereinfachte schematische Darstellung unterschiedlicher Betriebsmodi;
- Fig. 10: eine vereinfachte schematische Darstellung einer weiteren Ausgestaltung des erfindungsgemäßen Funkempfängers, sowie
- Fig. 11: eine vereinfachte schematische Darstellung einer weiteren Ausgestaltung des erfindungsgemäßen Funkempfängers.

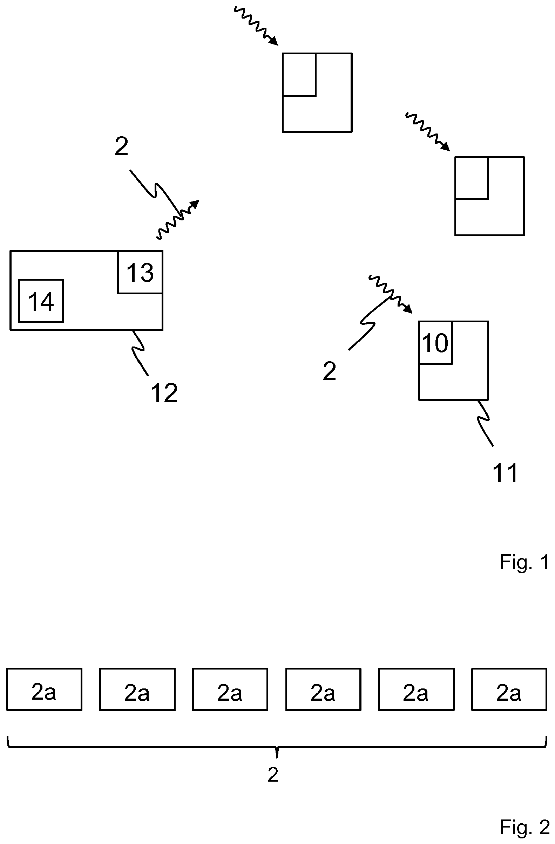

Fig. 1 zeigt ein erfindungsgemäßes Kommunikationssystem, bei welchem mehrere Endgeräte 11 mit jeweils einem integrierten Funkempfänger 10 des SDR (Software Defined Radio)-Typs mit einer Sende- und Empfangseinheit 13 eines Datensammlers 12 über Funk kommunizieren. Bei den Endgeräten 11 kann es sich beispielsweise um Verbrauchsmessgeräte, wie z. B. Gas-, Wasser-, Wärmemengen- oder Energiezähler, Sensoreinheiten, wie z. B. Füllstandsensoren oder Temperaturmesseinrichtungen, oder andere Sensorknoten z. B. einer loT (Internet of Things)-Anwendung handeln. Die Empfangseinrichtung 1 kann als Funkchip, SoC (System-on-Chip), SoS (System-on-Silicon), SIP (System-in-Package) oder dergleichen ausgestaltet sein. Ausdrücklich handelt es sich bei dem Endgerät 11 bzw. der Empfangseinrichtung 1 nicht um ein Gateway. Der Datensammler 12 ist dabei derart hergerichtet, dass dieser die Daten 2 über die Sende- und Empfangseinheit 13 an die Endgeräte 11 übertragen und/oder von diesen empfangen kann.

Bei den Daten 2 kann es sich beispielsweise um Betriebsdaten oder Programmaktualisierungsdaten bzw. Firmwareupdate-Daten handeln, die insbesondere vom Datensammler 12 an die Endgeräte 11 übertragen werden. Der Datensammler 12 kann die Daten 2 z. B. von einer, in den Figuren nicht dargestellten, übergeordneten Zentraleinheit empfangen, in einem Datenspeicher 14 hinterlegen und anschließend an die Endgeräte 11 senden. Die Daten 2 werden dabei, wie in Fig. 2 dargestellt, in Form von mindestens einem Datenpaket, vorzugsweise einer Mehrzahl von Datenpaketen 2a übertragen.

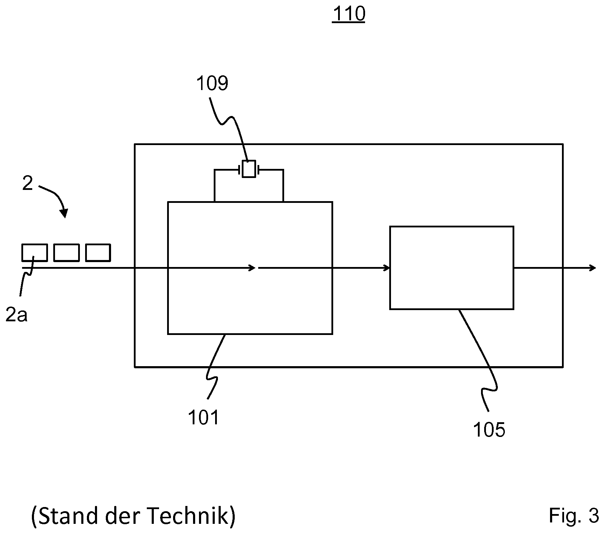

In Fig. 3 ist ein aus dem Stand der Technik bekannter gattungsgemäßer Funkempfänger 110 dargestellt. Die Daten 2 bzw. Datenpakete 2a werden hierbei in einem Betriebsmodus C von einer Empfangseinrichtung 101 des Funkempfängers 110 als analoges Eingangssignal empfangen und demoduliert. Zur Umsetzung des analogen Eingangssignals in einen digitalen Datenstrom ist ein Analog-Digital-Umsetzer (in den Figuren nicht dargestellt) vorgesehen. Ein der Empfangseinrichtung 101 zugeordneter oder nachgeschalteter Mikroprozessor 115 dient der weiteren Verarbeitung und/oder Weiterleitung der Daten 2. Ferner weist der Funkempfänger 110 einen Oszillator bzw. Taktgeber auf, der zur Festlegung der verwendeten Frequenz dient.

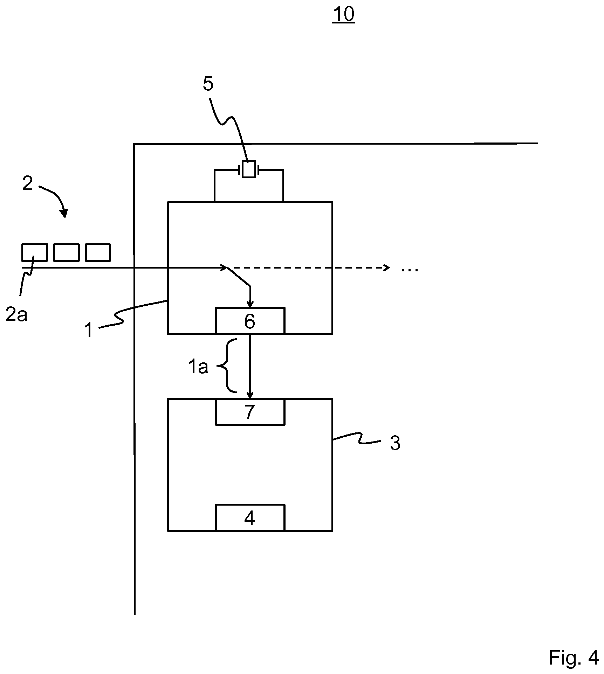

In Fig. 4 ist eine Ausgestaltung des erfindungsgemäßen Funkempfängers 10 dargestellt. Der Funkempfänger 10 umfasst eine Empfangseinrichtung 1 sowie einen Mikrocontroller 3 und ist vorzugsweise als eine gemeinsame strukturelle Einheit ausgestaltet, wie z. B. als ein integrierter Schaltkreis (IC). Erfindungsgemäß werden die Daten 2 bzw. Datenpakete 2a, die als analoges Signal empfangen werden, innerhalb der Empfangseinrichtung 1 abgezweigt und dem Mikrocontroller 3 über eine Schnittstelle 1a zugeführt. Die Empfangseinrichtung 1 bereitet die Daten dabei derart vor, dass aufwendige Rechenoperationen des Mikrocontrollers 3 vermindert oder gar verhindert werden und es zu keiner wesentlichen Verschlechterung z. B. durch Aliasing kommt. Dies erfolgt indem die Daten 2 mittels des vorzugsweise innerhalb der Empfangseinrichtung 1 angeordneten Analog-Digital-Umsetzers (in den Fig. nicht dargestellt) zunächst digitalisiert und über einen Filter 6 der Empfangseinrichtung 1 gefiltert werden. Dabei werden die digitalisierten Daten dem Mikrocontroller 3 mit einer im Vergleich zur Samplingrate gleichgroßen oder geringeren Bandbreite zur Verfügung gestellt, z. B. kleiner als 50 kHz. Der Filter 6 filtert dann die Daten 2 derart vor, dass der Mikrocontroller 3 keine Filterungen mehr durchführen muss. Die Samplingrate (bzw. Abtastrate) beschreibt dabei die Häufigkeit, mit der das Analogsignal (ein zeitkontinuierliches Signal) in einer Sekunde abgetastet wird, d. h. gemessen und in ein zeitdiskretes Signal umgewandelt wird. Beispielsweise gibt ein Wert von 2 kHz oder 4 kHz an, dass innerhalb einer Sekunde 2000 bzw. 4000 Samples durchgeführt werden. Die Samplingrate zum Mikrocontroller 3 gibt hierbei die Bandbreite vor, d. h. die Samplingrate stellt die maximal einstellbare ungefilterte Bandbreite zwischen Empfangseinrichtung 1 und Mikrocontroller 3 dar. Beispielsweise ist bei einer Samplingrate von 20 kHz theoretisch eine maximale Bandbreite von 20 kHz möglich, jedoch wird durch die Filterung des Filters 6 mit einer Bandbreite von nur 10 kHz zum Mikrocontroller hin 3 übertragen (Faktor = 2).

Die Bandbreite bei der Übertragung der Daten 2 von der Empfangseinrichtung 1 an den Mikrocontroller 3 ist somit gleich oder geringer als die Samplingrate. Dies kann insbesondere dadurch erfolgen, dass der Mikrocontroller 3 die Daten 2 innerhalb einer Dezimierungseinheit 7 mit einem festlegbaren Dezimierungsfaktor N dezimiert, d. h. der Mikrocontroller 3 wählt aus der von der Empfangseinrichtung 1 gelieferten Samplemenge einen Teil aus. Der Dezimierungsfaktor N ist vorzugsweise ganzzahlig, wie z. B. 2, 3 oder 4. Beispielsweise lässt der Mikrocontroller 3 bei einem Dezimierungsfaktor N=2 jedes zweite Sample aus, sodass die Bandbreite im Vergleich zur Samplingrate um einen Faktor 2 kleiner ist.

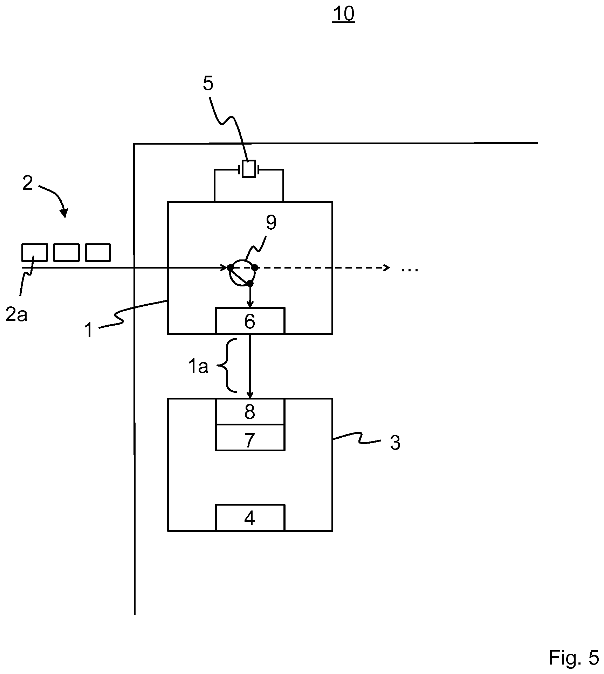

Alternativ oder zusätzlich zum Filter 6 kann auch der Mikrocontroller 3 einen Filter 8 aufweisen, wie in Fig. 5 dargestellt. Anschließend kann der Mikrocontroller 3 die dezimierten Daten in einem Speicher 4 z. B. blockweise hinterlegen bzw. zwischenspeichern, um diese z. B. für eine Weiterverarbeitung bereitzustellen. Der Schwingquarz 5 dient hierbei als Taktgeber für die Frequenzaufbereitung und die Trägerfrequenz sowie auch zur Taktung des Analog-Digital-Wandlers. Als Taktgeber kann entweder eine externe Einheit oder eine funktionell der Empfangseinrichtung 1 zugehörige Struktur vorgesehen sein. Die Festlegung der Samplingrate erfolgt insbesondere dadurch, dass die Taktfrequenz des Schwingquarzes 5 entsprechend geändert wird bzw. der Schwingquarz 5 nach seiner Taktfrequenz ausgewählt wird, um den Analog-Digital-Wandler entsprechend anders zu takten. Die Taktfrequenz wird dabei derart festgelegt, dass der Schwingquarz 5 die gewünschte Samplingrate zusammen mit dem Teiler bzw. dem Dezimierungsfaktor N vorgibt. Eine zusätzliche Filterung auf der Seite des Mikrocontrollers 3 oder energieaufwendige Resamples sind somit nicht notwendig.

Die Daten 2 werden nach dem Eingang in der Empfangseinrichtung 1 mittels des I/Q-Verfahrens (In-Phase/Quadrature-Verfahren) verarbeitet, d. h. in I/Q-Daten (digitale Daten) umgewandelt. Dies erfolgt, indem das analoge Eingangssignal in zwei Signalteile aufgeteilt wird, wobei ein Signalteil mit der originalen Phasenlage (I-Daten) und der andere Signalteil um 90° phasenverschobener Referenzfrequenz (Q-Daten) demoduliert wird. Die I/Q-Daten werden anschließend von der Empfangseinrichtung 1 an den Mikrocontroller 3 weitergegeben. Der Mikrocontroller 3 kann die Daten anschließend im Rahmen einer Algorithmik weiterverarbeiten bzw. zur Signalverarbeitung verwenden.

Die Betriebsweise, wie in Fig. 4 und Fig. 5 dargestellt, stellt dabei z. B. den ersten Betriebsmodus A dar, welcher im Funkempfänger 10 wahlweise auch während des Betriebs ein- und ausgeschaltet werden kann. Zusätzlich kann neben dem Betriebsmodus A der Betriebsmodus C vorgesehen sein, der in Fig. 4 und 5 anhand des gestrichelten Pfeils dargestellt ist. Bei dieser Ausgestaltung des Funkempfängers 10 kann zwischen Betriebsmodus A und Betriebsmodus C mittels einer Auswahl- bzw. Umschalteinrichtung 9 gewählt bzw. umgeschaltet werden.

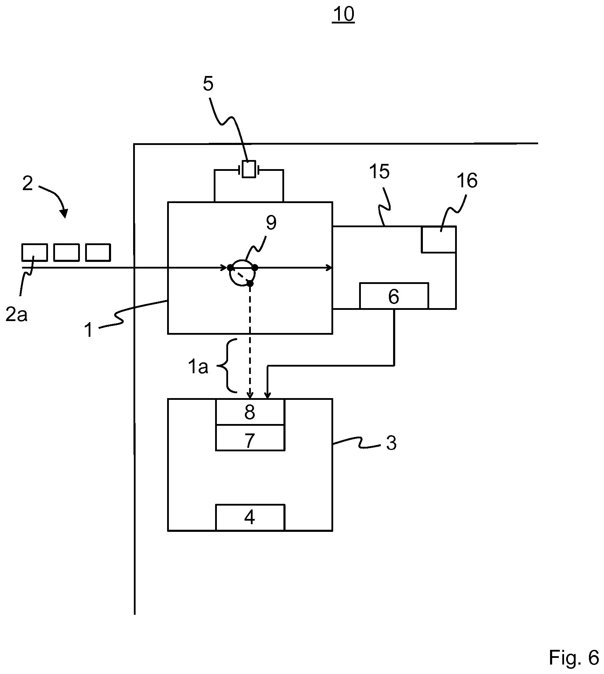

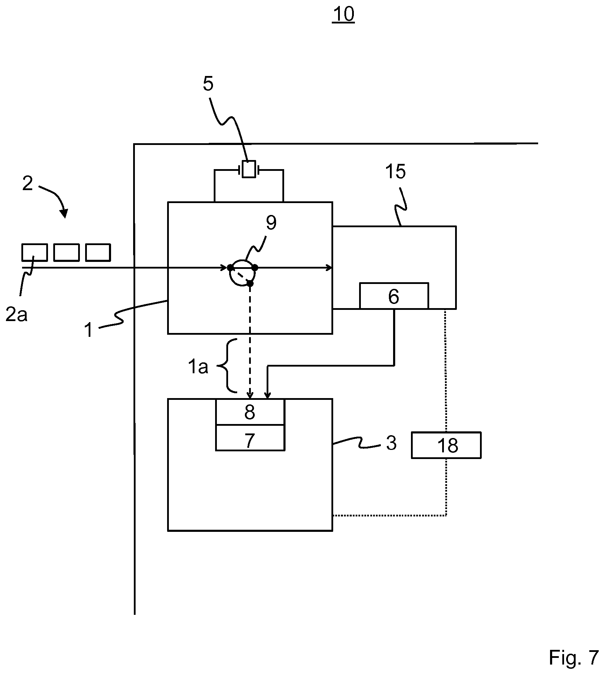

Die Ausgestaltung des Funkempfängers gemäß Fig. 6 wird mittels eines Betriebsmodus C betrieben. Hierzu umfasst die Empfangseinrichtung 1 einen Mikroprozessor 15, der alternativ auch als digitale Empfangsschaltung ausgestaltet sein kann. Der Mikroprozessor 15 ist dabei Teil eines RF-Front-Ends mit A/D-Wandler (der Übersichtlichkeit halber in den Figuren nicht dargestellt). Zudem kann der Mikroprozessor 15 den Filter 6 sowie einen eigenen Speicher umfassen, insbesondere einen RAM-Speicher 16. Alternativ oder zusätzlich kann auch, wie in Fig. 7 dargestellt, ein gemeinsamer (RAM-) Speicher 18 vorgesehen sein, auf den der Mikrocontroller 3 und der Mikroprozessor 15, z. B. über ein BUS-System, zugreifen können. Ferner kann auch ein zusätzlicher Betriebsmodus vorgesehen sein, der in Fig. 6 und 7 beispielhaft anhand der gestrichelten Linien und Pfeile dargestellt ist. Das Umschalten zwischen dem Betriebsmodus B und dem zusätzlichen Betriebsmodus kann wahlweise auch während des Betriebs über die Umschalteinrichtung 9 erfolgen.

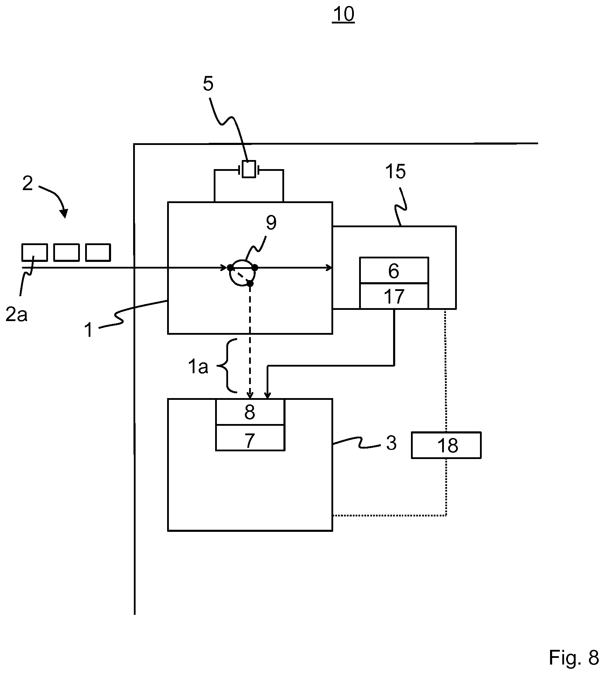

Fig. 8 zeigt eine weitere alternative Ausgestaltung der vorliegenden Erfindung, bei der Mikroprozessor 15 der Empfangseinrichtung 1 den Filter 6 umfasst und zusätzlich eine Dezimierung 17 aufweist, d. h. der Mikroprozessor 15 filtert und dezimiert die Daten bevor er diese dem Mikrocontroller 3 zur Signalverarbeitung bereitstellt und/oder im Speicher 18 hinterlegt. Die Ausstattung des Mikrocontrollers 3 mit einem Filter 8 und einer Dezimierungseinheit 7 sind hierbei optional. Vorzugsweise besitzt der Mikrocontroller 3 eine größere Effizienz für die benötigten Arbeitsschritte bzw. ist hierbei gegenüber dem Mikroprozessor 15 perfomanter. Die Algorithmik bzw. Signalverarbeitung kann jedoch auch durch den Mikroprozessor 15 erfolgen, sofern dieser bereits die benötigte Verarbeitungseffizienz besitzt.

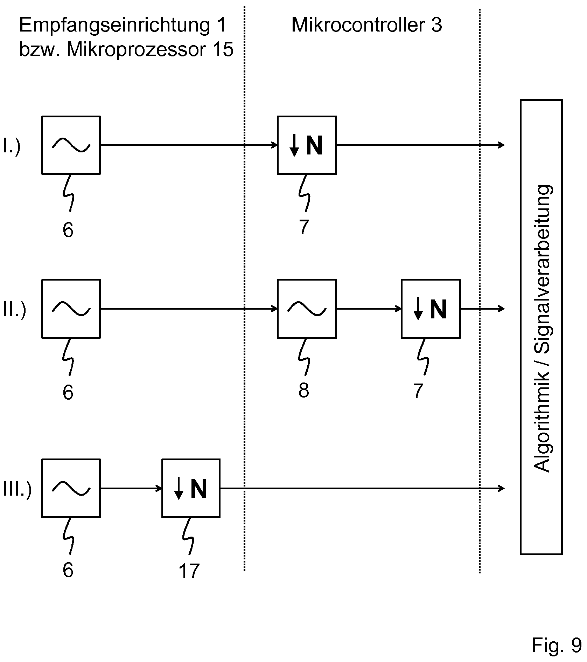

Ferner sind in Fig. 9 unterschiedliche Betriebsweisen I, II und III des Funkempfängers 10 dargestellt. Die Empfangseinrichtung 1 bzw. der Mikroprozessor 15 führen zunächst mittels des Filters 6 eine Filterung durch. Beim Filter 6 kann es sich insbesondere um einen Hoch-, Tief- oder Bandpassfilter handeln. Für den Fall, dass die Filterung für die Dezimierung entsprechend gut durchgeführt wurde, können die Daten gemäß Betriebsweise I an den Mikrocontroller 3 übermittelt werden, welcher diese mittels der Dezimierungseinheit 7 um den Dezimierungsfaktor N (z. B. 2 oder 4) dezimiert, indem er nur jedes N-te Sample verwertet und die restlichen Samples verwirft. Anschließend kann der Mikrocontroller 3 die Algorithmik bzw. Signalverarbeitung durchführen. Für den Fall, dass die Filterung für die Dezimierung nicht entsprechend gut durchgeführt werden konnte, werden die Daten gemäß Betriebsweise II zunächst im Mikrocontroller 3 mittels des Filters 8 gefiltert, um eine zumindest ausreichende Filterung zu erhalten, und anschließend durch die Dezimierungseinheit 7 dezimiert. Ferner können die Daten auch gemäß Betriebsweise III durch den Mikroprozessor 15 oder eine digitale Empfangsschaltung der Empfangseinrichtung 1 über den Filter 6 gefiltert und anschließend mittels der Dezimierung 17 des Mikroprozessors 15 dezimiert werden. Anschließend werden die dezimierten Daten an den Mikrocontroller 3 zur Algorithmik bzw. Signalverarbeitung übertragen oder die Algorithmik bzw. Signalverarbeitung kann sogleich durch den Mikroprozessor 15 durchgeführt werden. Insbesondere lassen sich Betriebsweise I und II z. B. über den Betriebsmodus A und Betriebsweise III z. B. über den Betriebsmodus B realisieren.

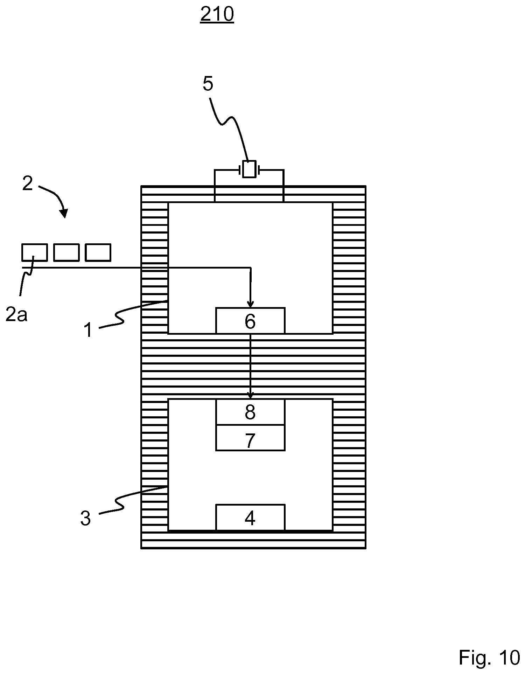

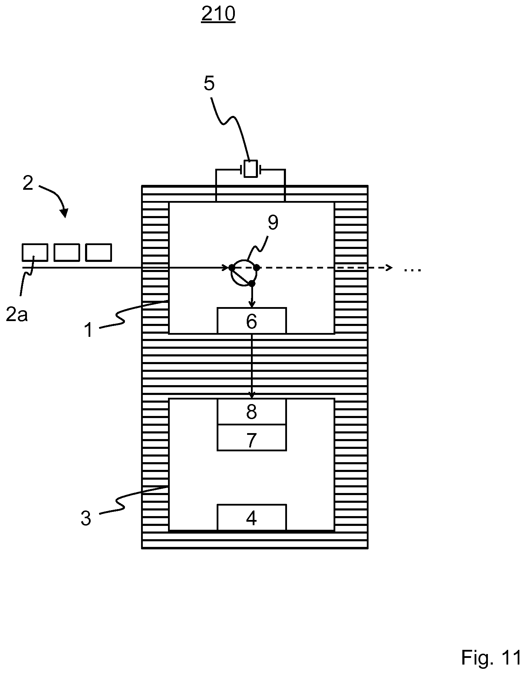

In Fig. 10 ist ein weiterer erfindungsgemäßer Funkempfänger 210 dargestellt, wobei es sich um einen Funkempfänger eines Typs handelt, bei dem die Signalverarbeitung ausschließlich durch Hardware verwirklicht ist. Der Funkempfänger 210 ist dabei komplett als anwendungsspezifische integrierte Schaltung (ASIC - application-specific integrated circuit) ausgestaltet. Ferner ist ein Taktgeber, insbesondere ein Schwingquarz 5, vorgesehen. Hierbei wird der Abtastfehler verändert, insbesondere verringert, indem eine Auswahl des Taktgebers anhand seiner Taktfrequenz getroffen wird. In bevorzugter Weise kann die Auswahl des Taktgebers bereits während des Herstellungsprozesses erfolgen. Ferner kann der Funkempfänger 210 auch gemäß Fig. 11 derart ausgestaltet sein, dass dieser den Betriebsmodus A sowie zusätzlich Betriebsmodus C (gestrichelter Pfeil) durchführen kann. Alternativ zum extern angeschlossenen Schwingquarz 5 kann der Funkempfänger 210 als Taktgeber auch einen internen Taktgeber, wie z. B. eine integrierte Oszillatorschaltung umfassen. In praktischer Weise umfasst die vorliegende Erfindung auch nicht dargestellte Ausgestaltungsformen des Funkempfängers 210, die dazu hergerichtet sind, die Betriebsmodi A, B und/oder C und/oder die Betriebsweisen I, II und/oder III, insbesondere in der jeweils vorbeschriebenen Art, durchzuführen.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Empfangseinrichtung
- 1a: Schnittstelle
- 2: Daten
- 2a: Datenpaket
- 3: Mikrocontroller
- 4: Speicher
- 5: Schwingquarz
- 6: Filter
- 7: Dezimierungseinheit
- 8: Filter
- 9: Umschalteinrichtung
- 10: Funkempfänger
- 11: Endgerät
- 12: Konzentrator
- 13: Sende- und Empfangseinheit
- 14: Datenspeicher
- 15: Mikroprozessor
- 16: RAM-Speicher
- 17: Dezimierung
- 18: gemeinsamer Speicher

- 101: Empfangseinrichtung
- 105: Schwingquarz
- 110: Funkempfänger
- 115: Mikroprozessor

- 210: Empfangseinrichtung

## Patentansprüche

1. Funkempfänger (10) für den Einsatz in einer langzeitenergieautarken Umgebung, wobei der Funkempfänger (10) eine Empfangseinrichtung (1) umfasst, die Daten (2) in Form mindestens eines Datenpakets oder eines Teils davon oder eines Datenstroms mit einer bestimmten Datenrate empfängt und zur Datenweiterverarbeitung bereitstellt, **dadurch gekennzeichnet, dass**
der Funkempfänger (10) einen Mikrocontroller (3) umfasst,
wobei die empfangenen oder empfangenen und gefilterten Daten (2) in einem über eine Umschalteinrichtung (9) wählbaren Betriebsmodus A innerhalb der Empfangseinrichtung (1) abgezweigt und die Daten (2) in Form von I/Q-Daten dem Mikrocontroller (3) mit einer festlegbaren Samplingrate zugeführt werden,
der Mikrocontroller (3) oder die Empfangseinrichtung (1) in dem Betriebsmodus A die Daten dezimiert, indem ein Teil aus der Samplemenge ausgewählt wird, und
der Mikrocontroller (3) in dem Betriebsmodus A die dezimierten Daten in einem Speicher (4, 18) zwischenspeichert und für eine Weiterverarbeitung bereitstellt,
wobei neben dem Betriebsmodus A ein über die Umschalteinrichtung (9) wählbarer Betriebsmodus C vorgesehen ist, bei dem die Daten von einem Mikroprozessor (15) oder einer Logik bzw. digitalen Empfangsschaltung, der bzw. die der Empfangseinrichtung (1) nachgeschaltet und/oder Teil der Empfangseinrichtung (1) ist, bearbeitet werden.

2. Funkempfänger (10) nach Anspruch 1, wobei
die empfangenen oder empfangenen und gefilterten Daten (2) in einem über die Umschalteinrichtung (9) wählbaren Betriebsmodus B dem Mikroprozessor (15) oder der digitalen Empfangsschaltung zugeführt werden, und
die Daten (2) in dem Betriebsmodus B durch den Mikroprozessor (15) oder die digitale Empfangsschaltung gefiltert und anschließend dezimiert werden, indem ein Teil aus einer Samplemenge ausgewählt wird.

3. Funkempfänger (10) nach Anspruch 1 oder 2, der vom SDR-Typ ist und/oder der **dadurch gekennzeichnet ist, dass** ein Taktgeber, insbesondere ein Schwingquarz (5) vorgesehen ist, und dass vorzugsweise die Samplingrate anhand der Taktfrequenz des Taktgebers festgelegt wird.

4. Funkempfänger (210) nach Anspruch 1 oder 2, der von einem Typ ist, bei dem die Signalverarbeitung zumindest im Wesentlichen, vorzugsweise ausschließlich durch Hardware verwirklicht ist , wobei
ein Taktgeber, insbesondere ein Schwingquarz (5), vorgesehen ist, und der Abtastfehler durch eine Auswahl des Taktgebers anhand seiner Taktfrequenz verändert, insbesondere verringert, wird.

5. Funkempfänger nach einem der vorhergehenden Ansprüche, **dadurch gekennzeichnet, dass** die Empfangseinrichtung (1) einen Filter (6) umfasst, welcher die Daten (2) vor der Zuführung an den Mikrocontroller (3) filtert, wobei insbesondere vorgesehen ist, **dass** die Bandbreite, mit der die Daten (2) nach dem Filter (6) dem Mikrocontroller (3) zugeführt werden, vorzugsweise kleiner als 200 kHz, vorzugsweise kleiner als 100 kHz und besonders vorzugsweise kleiner als 50 kHz ist.

6. Funkempfänger nach einem der vorhergehenden Ansprüche, **dadurch gekennzeichnet, dass** der Mikrocontroller (3) einen Filter (8) umfasst, welcher die Daten (2) vor der Dezimierung filtert.

7. Funkempfänger nach einem der vorhergehenden Ansprüche, **dadurch gekennzeichnet, dass** die Dezimierung der Daten (2) durch den Mikrocontroller (3) erfolgt, indem der Mikrocontroller (3) einzelne Samples der von der Empfangseinrichtung (1) gelieferten Samplemenge unberücksichtigt lässt und die Auswahl der Samples anhand eines ganzzahligen Dezimierungsfaktors erfolgt

8. Funkempfänger nach einem der vorhergehenden Ansprüche, **dadurch gekennzeichnet, dass** am Mikrocontroller (3) für unterschiedliche Bandbreiten unterschiedliche Samplingraten festlegbar sind.

9. Funkempfänger nach einem der vorhergehenden Ansprüche, **dadurch gekennzeichnet, dass** die Taktfrequenz des Taktgebers zwischen 20 MHz und 50 MHz, vorzugsweise zwischen 23 MHz und 25 MHz, 38 MHz und 40 MHz oder 47 MHz und 49 MHz, besonders vorzugsweise bei 24 MHz, 39 MHz oder 48 MHz liegt.

10. Funkempfänger nach einem der vorhergehenden Ansprüche, **dadurch gekennzeichnet, dass** der Fehler der Taktfrequenz des Taktgebers kleiner als 10 ppm, vorzugsweise kleiner als 5 ppm, besonders vorzugsweise kleiner als 3 ppm ist.

11. Funkempfänger nach einem der vorhergehenden Ansprüche, **dadurch gekennzeichnet, dass** der Betriebsmodus A und/oder der Betriebsmodus B ein- sowie ausschaltbar ist.

12. Funkempfänger nach einem der vorhergehenden Ansprüche, **dadurch gekennzeichnet, dass** neben dem Betriebsmodus A oder dem Betriebsmodus B ein Betriebsmodus C vorgesehen ist, bei dem die Daten (2) vor der Übertragung an den Mikrocontroller (3) von einem Mikroprozessor (15) oder einer digitalen Empfangsschaltung der Empfangseinrichtung (1) bearbeitet werden, und zwischen dem Betriebsmodus A bzw. Betriebsmodus B und dem Betriebsmodus C gewechselt werden kann.

13. Funkempfänger nach einem der vorhergehenden Ansprüche, **dadurch gekennzeichnet, dass** die Übertragung der Daten (2) zwischen der Empfangseinrichtung (1) und dem Mikrocontroller (3) schrittweise erfolgt und zwischen der Übertragung der Daten Zeitintervalle vorgesehen sind, in denen keine Übertragung erfolgt wobei insbesondere vorgesehen ist,, **dass** der Mikrocontroller (3) in den Zeitintervallen, in denen keine Übertragung der Daten (2) stattfindet, in einen Sleepmodus übergeht.

14. Funkempfänger nach einem der vorhergehenden Ansprüche, **dadurch gekennzeichnet, dass** der Mikrocontroller (3) dazu hergerichtet ist, die Daten (2) zu dekodieren.

15. Funkempfänger nach einem der vorhergehenden Ansprüche, **dadurch gekennzeichnet, dass** der Mikrocontroller (3) dazu hergerichtet ist, neben der Bearbeitung und Speicherung der Daten (2) auch höhere Schichten zu bearbeiten.

16. Funkempfänger nach einem der vorhergehenden Ansprüche, **dadurch gekennzeichnet, dass** die Empfangseinrichtung (1) und der Mikrocontroller (3) als eine gemeinsame strukturelle Einheit, insbesondere als integrierter Schaltkreis, ausgebildet sind.

17. Funkempfänger nach einem der vorhergehenden Ansprüche, **dadurch gekennzeichnet, dass** der Funkempfänger (10, 210) eine Energiequelle zur Energieversorgung umfasst, insbesondere eine Batterie mit einer Kapazität von weniger als 20 Ah.

18. Kommunikationssystem zum Übertragen von Daten (2) zwischen mindestens einem Konzentrator (12) sowie mehreren, vorzugsweise eine Vielzahl von, energieautarken Endgeräten (11), wobei
ein Endgerät (12) jeweils einen Funkempfänger (10, 210) mit einer Empfangseinrichtung (1) umfasst,
die Empfangseinrichtung (1) die Daten (2) des Konzentrators (12) in Form mindestens eines Datenpakets oder eines Teils davon oder eines Datenstroms mit einer bestimmten Datenrate empfängt und vorzugsweise zur Datenweiterverarbeitung bereitstellt, **dadurch gekennzeichnet, dass**
als Funkempfänger ein Funkempfänger (10, 210) nach mindestens einem der vorhergehenden Ansprüche vorgesehen ist.

## Claims

1. Radio receiver (10) for use in an environment that is self-sufficient in terms of energy over the long term, wherein the radio receiver (10) comprises a receiving device (1) which receives data (2) in the form of at least one data packet or a portion thereof or a data stream at a certain data rate and provides said data for further data processing, **characterized in that**
the radio receiver (10) comprises a microcontroller (3), wherein, in an operating mode A that can be selected via a switchover device (9), the received, or received and filtered, data (2) are diverted within the receiving device (1) and the data (2) are supplied in the form of I/Q data to the microcontroller (3) at a sampling rate which can be defined,
the microcontroller (3) or the receiving device (1) decimates the data in the operating mode A by selecting a portion from the set of samples, and
the microcontroller (3) buffers the decimated data in a memory (4, 18) in the operating mode A and provides said data for further processing,
wherein an operating mode C that can be selected via the switchover device (9) is provided in addition to the operating mode A, in which operating mode C the data are processed by a microprocessor (15) or a logic unit or digital receiving circuit that is connected downstream of the receiving device (1) and/or is part of the receiving device (1).

2. Radio receiver (10) according to Claim 1,
wherein, in an operating mode B that can be selected via the switchover device (9), the received, or received and filtered, data (2) are supplied to the microprocessor (15) or to the digital receiving circuit,
and
the data (2) are filtered by the microprocessor (15) or the digital receiving circuit in the operating mode B and are then decimated by selecting a portion from a set of samples.

3. Radio receiver (10) according to Claim 1 or 2, which is of the SDR type and/or which is **characterized in that** a clock generator, in particular a crystal oscillator (5), is provided, and **in that** preferably the sampling rate is defined by the clock frequency of the clock generator.

4. Radio receiver (210) according to Claim 1 or 2, which is of
a type in which the signal processing is implemented at least mainly, preferably entirely, by hardware, wherein a clock generator, in particular a crystal oscillator (5), is provided, and the sampling error is modified, in particular reduced, by selecting the clock generator on the basis of its clock frequency.

5. Radio receiver according to one of the preceding claims, **characterized in that** the receiving device (1) comprises a filter (6) that filters the data (2) before supplying them to the microcontroller (3), wherein provision is made, in particular, for the bandwidth at which the data (2) are supplied to the microcontroller (3) after the filter (6) to be preferably less than 200 kHz, preferably less than 100 kHz and particularly preferably less than 50 kHz.

6. Radio receiver according to one of the preceding claims, **characterized in that** the microcontroller (3) comprises a filter (8) that filters the data (2) before decimation.

7. Radio receiver according to one of the preceding claims, **characterized in that** the data (2) are decimated by the microcontroller (3) by the microcontroller (3) disregarding individual samples of the set of samples supplied by the receiving device (1), and the samples being selected on the basis of an integer decimation factor.

8. Radio receiver according to one of the preceding claims, **characterized in that** different sampling rates can be defined at the microcontroller (3) for different bandwidths.

9. Radio receiver according to one of the preceding claims, **characterized in that** the clock frequency of the clock generator is between 20 MHz and 50 MHz, preferably between 23 MHz and 25 MHz, 38 MHz and 40 MHz or 47 MHz and 49 MHz, particularly preferably 24 MHz, 39 MHz or 48 MHz.

10. Radio receiver according to one of the preceding claims, **characterized in that** the error in the clock frequency of the clock generator is less than 10 ppm, preferably less than 5 ppm, particularly preferably less than 3 ppm.

11. Radio receiver according to one of the preceding claims, **characterized in that** the operating mode A and/or the operating mode B can be enabled and disabled.

12. Radio receiver according to one of the preceding claims, **characterized in that** an operating mode C is provided in addition to the operating mode A or the operating mode B, in which operating mode C the data (2) are processed by a microprocessor (15) or a digital receiving circuit of the receiving device (1) before being transferred to the microcontroller (3), and it is possible to switch between the operating mode A or operating mode B and the operating mode C.

13. Radio receiver according to one of the preceding claims, **characterized in that** the data (2) are transferred between the receiving device (1) and the microcontroller (3) in steps, and time intervals in which no transfer takes place are provided between the transfer of the data, wherein provision is made, in particular, for the microcontroller (3) to shift into a sleep mode in the time intervals in which no data (2) are transferred.

14. Radio receiver according to one of the preceding claims, **characterized in that** the microcontroller (3) is configured to decode the data (2).

15. Radio receiver according to one of the preceding claims, **characterized in that** the microcontroller (3) is configured to process also higher layers in addition to processing and storing the data (2).

16. Radio receiver according to one of the preceding claims, **characterized in that** the receiving device (1) and the microcontroller (3) are embodied as a common structural unit, in particular as an integrated circuit.

17. Radio receiver according to one of the preceding claims, **characterized in that** the radio receiver (10, 210) comprises an energy source for supplying energy, in particular a battery having a capacity of less than 20 Ah.

18. Communication system for transferring data (2) between at least one concentrator (12) and a plurality of, preferably a multiplicity of, terminals (11) that are self-sufficient in terms of energy, wherein
each terminal (12) comprises a radio receiver (10, 210) having a receiving device (1),
the receiving device (1) receives the data (2) from the concentrator (12) in the form of at least one data packet or a portion thereof or a data stream at a certain data rate and provides said data preferably for further data processing, **characterized in that**
a radio receiver (10, 210) according to at least one of the preceding claims is provided as the radio receiver.

## Revendications

1. Récepteur radio (10) destiné à être utilisé dans un environnement autonome en énergie à long terme, le récepteur radio (10) comprenant un dispositif de réception (1) qui reçoit des données (2) sous la forme d'au moins un paquet de données ou d'une partie de celui-ci ou d'un flux de données à un débit spécifique et les fournit en vue d'un traitement ultérieur des données, **caractérisé en ce que**
le récepteur radio (10) comprend un microcontrôleur (3), dans lequel les données (2) reçues ou reçues et filtrées sont, dans un mode de fonctionnement A pouvant être sélectionné par l'intermédiaire d'un dispositif de commutation (9), déviées au sein du dispositif de réception (1) et les données (2) sous forme de données I/Q sont fournies au microcontrôleur (3) à une fréquence d'échantillonnage réglable,
le microcontrôleur (3) ou le dispositif de réception (1), dans le mode de fonctionnement A, décime les données en sélectionnant une partie de l'ensemble d'échantillons, et
le microcontrôleur (3), dans le mode de fonctionnement A, stocke temporairement les données décimées dans une mémoire (4, 18) et les fournit en vue d'un traitement ultérieur,
dans lequel il est prévu en plus du mode de fonctionnement A, un mode de fonctionnement C pouvant être sélectionné par l'intermédiaire du dispositif de commutation (9), dans lequel les données sont traitées par un microprocesseur (15) ou une logique ou un circuit de réception numérique, qui est respectivement connecté en aval du dispositif de réception (1) et/ou qui fait partie du dispositif de réception (1).

2. Récepteur radio (10) selon la revendication 1,
dans lequel les données (2) reçues ou reçues et filtrées, dans un mode de fonctionnement B, sont fournies au microprocesseur (15) ou au circuit de réception numérique pouvant être sélectionné par l'intermédiaire du dispositif de commutation (9),
et
les données (2), dans le mode de fonctionnement B, sont filtrées par le microprocesseur (15) ou le circuit de réception numérique puis décimées par le fait d'en sélectionner une partie au sein d'un ensemble d'échantillons.

3. Récepteur radio (10) selon la revendication 1 ou 2, qui est de type SDR et/ou qui est **caractérisé en ce qu'**il est prévu un générateur d'horloge, notamment un oscillateur à quartz (5), et **en ce que** la fréquence d'échantillonnage est de préférence déterminée sur la base de la fréquence d'horloge du générateur d'horloge.

4. Récepteur radio (210) selon la revendication 1 ou 2, qui est
d'un type dans lequel le traitement du signal est réalisé au moins sensiblement, de préférence exclusivement, par matériel, dans lequel
il est prévu un générateur d'horloge, notamment un oscillateur à quartz (5), et l'erreur d'échantillonnage est modifiée, notamment réduite, par sélection du générateur d'horloge sur la base de sa fréquence d'horloge.

5. Récepteur radio selon l'une des revendications précédentes, **caractérisé en ce que** le dispositif de réception (1) comprend un filtre (6) qui filtre les données (2) avant leur fourniture au microcontrôleur (3), dans lequel il est notamment prévu que la bande passante avec laquelle les données (2) sont fournies au microcontrôleur (3) après le filtre (6) est de préférence inférieure à 200 kHz, de préférence inférieure à 100 kHz et tout particulièrement inférieure à 50 kHz.

6. Récepteur radio selon l'une des revendications précédentes, **caractérisé en ce que** le microcontrôleur (3) comprend un filtre (8) qui filtre les données (2) avant la décimation.

7. Récepteur radio selon l'une des revendications précédentes, **caractérisé en ce que** la décimation des données (2) est effectuée par le microcontrôleur (3) en faisant en sorte que le microcontrôleur (3) ignore des échantillons individuels de l'ensemble d'échantillons fournis par le dispositif de réception (1), et **en ce que** la sélection des échantillons est effectuée sur la base d'un facteur de décimation entier.

8. Récepteur radio selon l'une des revendications précédentes, **caractérisé en ce que** des fréquences d'échantillonnage différentes peuvent être définies sur le microcontrôleur (3) pour des bandes passantes différentes.

9. Récepteur radio selon l'une des revendications précédentes, **caractérisé en ce que** la fréquence d'horloge du générateur d'horloge est comprise entre 20 MHz et 50 MHz, de préférence entre 23 MHz et 25 MHz, 38 MHz et 40 MHz ou 47 MHz et 49 MHz, et tout particulièrement à 24 MHz, 39 MHz ou 48 MHz.

10. Récepteur radio selon l'une des revendications précédentes, **caractérisé en ce que** l'erreur de la fréquence d'horloge du générateur d'horloge est inférieure à 10 ppm, de préférence inférieure à 5 ppm, et tout particulièrement inférieure à 3 ppm.

11. Récepteur radio selon l'une des revendications précédentes, **caractérisé en ce que** le mode de fonctionnement A et/ou le mode de fonctionnement B peut être activé et désactivé.

12. Récepteur radio selon l'une des revendications précédentes, **caractérisé en ce qu'**il est prévu, outre le mode de fonctionnement A ou le mode de fonctionnement B, un mode de fonctionnement C, dans lequel les données (2) sont traitées avant la transmission au microcontrôleur (3) par un microprocesseur (15) ou un circuit de réception numérique du dispositif de réception (1), et qu'il est possible de basculer entre le mode de fonctionnement A ou le mode de fonctionnement B et le mode de fonctionnement C.

13. Récepteur radio selon l'une des revendications précédentes, **caractérisé en ce que** la transmission des données (2) entre le dispositif de réception (1) et le microcontrôleur (3) s'effectue pas à pas et **en ce qu'**il est prévu entre les transmissions de données des intervalles de temps durant lesquels aucune transmission n'a lieu, étant notamment prévu que le microcontrôleur (3) passe en mode de veille pendant les intervalles de temps durant lesquels aucune transmission de données (2) n'a lieu.

14. Récepteur radio selon l'une des revendications précédentes, **caractérisé en ce que** le microcontrôleur (3) est configuré pour décoder les données (2).

15. Récepteur radio selon l'une des revendications précédentes, **caractérisé en ce que** le microcontrôleur (3) est configuré pour traiter également des couches supérieures en plus du traitement et du stockage des données (2).

16. Récepteur radio selon l'une des revendications précédentes, **caractérisé en ce que** le dispositif de réception (1) et le microcontrôleur (3) sont conçus sous la forme d'une unité structurelle commune, notamment d'un circuit intégré.

17. Récepteur radio selon l'une des revendications précédentes, **caractérisé en ce que** le récepteur radio (10, 210) comprend une source d'énergie pour l'alimentation électrique, notamment une batterie ayant une capacité inférieure à 20 Ah.

18. Système de communication pour la transmission de données (2) entre au moins un concentrateur (12) et plusieurs, de préférence une pluralité, de terminaux autonomes en énergie (11), dans lequel
un terminal (12) comprend respectivement un récepteur radio (10, 210) doté d'un dispositif de réception (1), le dispositif de réception (1) reçoit les données (2) du concentrateur (12) sous la forme d'au moins un paquet de données ou d'une partie de celui-ci ou d'un flux de données à un débit spécifique et les fournit de préférence en vue d'un traitement ultérieur des données, **caractérisé**
**en ce qu'**il est prévu en tant que récepteur radio un récepteur radio (10, 210) selon au moins l'une des revendications précédentes.
